# EUROPÄISCHE PATENTSCHRIFT

(11) **EP 3 504 391 B1**
(45) Veröffentlichungstag und Bekanntmachung des Hinweises auf die Patenterteilung: **20.03.2024**
(21) Anmeldenummer: 17801335.5
(22) Anmeldetag: 06.11.2017
(51) Int. Cl.: E05D 5/02

(54) **SCHARNIERANORDNUNG FÜR EIN SCHALTSCHRANKGEHÄUSE UND EIN ENTSPRECHENDES SCHALTSCHRANKGEHÄUSE**
HINGE ASSEMBLY FOR A SWITCHBOARD ENCLOSURE AND A CORRESPONDING SWITCHBOARD ENCLOSURE
ENSEMBLE CHARNIÈRE POUR UN BOITIER D'ARMOIRE ÉLECTRIQUE ET UN BOITIER D'ARMOIRE ÉLECTRIQUE CORRESPONDANT

(30) Priorität: 01.12.2016 DE 102016123230
(43) Veröffentlichungstag der Anmeldung: 03.07.2019
(60) Teilanmeldung: 19186609.4
(73) Patentinhaber: Rittal GmbH & Co. KG, 35745 Herborn (DE)
(72) Erfinder: BLOH, Achim, 35644 Hohenahr-Ahrdt (DE); SCHÖNDORF, Nora, 35713 Eschenburg (DE); REUTER, Wolfgang, 56479 Liebenscheid (DE)
(74) Vertreter: Angerhausen, Christoph
(86) Internationale Anmeldenummer: PCT/DE2017/100937
(87) Internationale Veröffentlichungsnummer: WO 2018/099508

(56) Entgegenhaltungen:
- EP-A1- 0 192 520
- EP-A1- 0 223 871
- EP-B1- 1 777 363
- DE-C1- 3 340 491

## Beschreibung

Die Erfindung geht aus von einem Schaltschrankgehäuse gemäß dem Oberbegriff des Anspruchs 1. Ein solches Schaltschrankgehäuse ist aus der EP o 192 520 A1 bekannt. Einen ähnlichen Schaltschrank beschreibt auch die EP 0 223 871 A1 und die DE 33 40 491 C1.

Die EP 1 777 363 B1 offenbart einen Schaltschrank mit einer Scharnieranordnung mit einer ersten Scharnierhälfte, die an einer eine Türöffnung begrenzenden vertikalen Seitenwand eines Schaltschrankgehäuses oder an einem die Türöffnung begrenzenden Vertikalprofil eines Rahmengestells eines Schaltschrankgehäuses befestigt ist, und mit einer zweiten Scharnierhälfte, die an einem Türelement befestigt ist, wobei die Scharnierhälften über eine Drehachse zueinander verschwenkbar miteinander verbunden sind, so dass in einer Schließstellung das Türelement die Türöffnung verschließt und in einer Offenstellung vorzugsweise vollständig freigibt, und wobei die Drehachse außerhalb eines Außenumfangs sowohl der Türöffnung als auch des Türelements angeordnet ist. Durch die Verlagerung der Drehachse nach außerhalb des Außenumfangs von sowohl dem Schaltschrankgehäuse als auch dem Türelement wird ein sogenanntes 180°-Scharnier erreicht, welches es ermöglicht, das Türelement aus seiner Schließposition um zumindest 180° in eine Offenstellung zu verschwenken. Die bisher bekannten Scharnieranordnungen haben den Nachteil, dass für ihre Montage entweder das Schaltschrankgehäuse oder das Türelement nachgearbeitet werden muss. Beispielsweise müssen spezielle Ausschnitte zur Durchführung der Drehachsen oder Bohrungen für die Befestigung der Scharnierhälften bereitgestellt werden, ohne die eine Montage der bekannten Scharnieranordnungen am Schaltschrankgehäuse beziehungsweise am Türelement nicht möglich ist.

Es ist daher die Aufgabe der Erfindung, ein Schaltschrankgehäuse vorzuschlagen, das keine Nachbearbeitung des Schaltschrankgehäuses oder des Türelements erfordert und damit die im Wesentlichen werkzeuglose Montage der Scharnieranordnung ermöglicht.

Diese Aufgabe wird durch ein Schaltschrankgehäuse mit den Merkmalen des Anspruchs 1 gelöst. Vorteilhafte Ausführungsformen sind jeweils Gegenstand der abhängigen Ansprüche.

Demgemäß ist vorgesehen, dass bei einer Scharnieranordnung der eingangs beschriebenen Art mindestens eine der Scharnierhälften eine Nut aufweist, über die die betreffende Scharnierhälfte auf einen Vorsprung an dem Außenumfang des der Scharnierhälfte zugeordneten Teils von Schaltschrankgehäuse und Türelement aufgesteckt ist. Dazu kann beispielsweise zwischen dem Vorsprung und der Nut eine Clip-Verbindung ausgebildet sein, so dass die Scharnierhälfte durch ein "Aufclipsen" auf dem Schaltschrankgehäuse bzw. dem Türelement montiert werden kann. Weiterhin ist vorgesehen, dass der Vorsprung an seiner von dem Außenumfang abgewandten Innenseite ein Befestigungsmittel und die auf dem Vorsprung über ihre Nut vollständig aufgesteckte Scharnierhälfte ein mit dem Befestigungsmittel wirkgekoppeltes weiteres Befestigungsmittel aufweist, über die die zweite Scharnierhälfte in ihrer vollständig auf den Vorsprung aufgesteckten Position festgelegt ist.

Das Türelement ist ein gekantetes Flachteil, das eine Türseite aufweist, die sich in der Schließstellung des Türelements parallel zu der Türöffnung erstreckt und diese bedeckt, und die die umlaufende 90°-Umkantung aufweist. Erfindungsgemäß lagert die zweite Scharnierhälfte mit einer ersten Stützfläche an der Türseite und einer zweiten Stützfläche an der 90°-Umkantung.

Durch das Aufstecken der Scharnierhälfte über die Nut auf den Vorsprung kann zumindest eine Vormontage der Scharnierhälfte auf dem den Vorsprung aufweisenden Bauteil, das heißt entweder auf dem Schaltschrankgehäuse oder dem Türelement, erreicht werden. Die Vormontage kann beispielsweise insoweit erfolgen, dass Befestigungsmittel, für die kraftschlüssige Verbindung von Schaltschrankgehäuse beziehungsweise Türelement und Scharnierhälfte für eine anschließende kraftschlüssige Verbindung vorpositioniert sind. Beispielsweise können dazu Befestigungsaufnahmen, beispielsweise Befestigungsdurchlässe oder Bohrungen von Scharnierhälfte und Schaltschrankgehäuse bzw. Türelement fluchtend zueinander angeordnet werden, so dass für die endgültige kraftschlüssige Verriegelung beider Komponenten miteinander lediglich noch ein Befestigungsmittel, beispielsweise ein Arretierbolzen werkzeuglos eingesteckt werden kann.

Der Vorsprung kann sich parallel zu der Drehachse und, zumindest dann, wenn das Türelement die Türöffnung verschließt, senkrecht zu der Türöffnungsebene erstrecken, mithin aus der Türöffnungsebene herausstehen. Der Vorsprung kann insbesondere eine, gegebenenfalls umlaufend geschlossene, 90°-Umkantung an dem Außenumfang des Türelements sein. Der Vorsprung kann auch ein vorstehender Steg oder ein umlaufender Flansch sein.

Dabei kann das Befestigungsmittel eine Bolzendurchlassöffnung, insbesondere eine aufgeschweißte Öse und das weitere Befestigungsmittel eine mit der Bolzendurchlassöffnung fluchtende weitere Bolzendurchlassöffnung durch die zweite Scharnierhälfte sein, wobei die fluchtenden Bolzendurchlassöffnungen über einen durch sie hindurch geführten Verbindungsbolzen miteinander verbunden sind.

Das Türelement kann ein gekantetes Flachteil sein, das eine Türseite aufweist, die sich in der Schließstellung des Türelements parallel zu der Türöffnung erstreckt und diese bedeckt, und die die umlaufende 90°-Umkantung aufweist, und wobei die zweite Scharnierhälfte mit einer ersten Stützfläche an der Türseite und einer zweiten Stützfläche an der 90°-Umkantung lagert beziehungsweise anliegt.

Weiterhin kann das Schaltschrankgehäuse an der Türöffnung ein U-Profil mit zwei parallelen oder im Wesentlichen parallelen Profilseiten aufweisen, das über eine sich senkrecht zu diesen erstreckende weitere Profilseite miteinander verbunden ist, wobei das U-Profil über eine erste der im Wesentlichen parallelen Profilseiten und eine weitere 90°-Umkantung an die weitere Seitenwand anprofiliert ist, und wobei die zweite der parallelen Profilseiten eine Dichtseite ist, die an einem an einem Türelement innenseitig angeordneten Dichtelement anliegt, wenn sich das Türelement in seiner Schließstellung befindet.

Dabei kann sich das erste Scharnierelement zwischen den beiden parallelen Profilseiten erstrecken und an der an die Seitenwand anprofilierten Profilseite befestigt sein.

Weiterhin kann die zweite Scharnierhälfte zwei Lagerteile mit jeweils einer ersten Durchgangsbohrung zur Aufnahme der Drehachse, eine sich dazu parallel erstreckende zweite Durchgangsbohrung zur Aufnahme des Befestigungsmittels und eine sich ebenfalls parallel dazu erstreckende in Drehachsenrichtung durchgehende Teilnut aufweisen, wobei die beiden Lagerteile über einen Verbindungssteg unter einem Abstand zueinander und mit sowohl fluchtenden ersten und zweiten Durchgangsbohrungen als auch fluchtenden Teilnuten miteinander verbunden sind.

Dabei kann weiterhin vorgesehen sein, dass der Verbindungssteg eine Anlageseite aufweist, die mit jeweils einer Begrenzungsseite der beiden Teilnuten fluchtet, so dass die Anlageseite des Verbindungssteges mit den Begrenzungsseiten der Teilnuten eine in Drehachsenrichtung durchgehende Nutbegrenzungswand der Nut der zweiten Scharnierhälfte bilden. Die beiden Begrenzungsseiten der beiden Teilnuten können insbesondere eine der beiden von zwei gegenüberliegenden und im Wesentlichen parallel beabstandeten, seitlichen, das heißt sich in Tiefenrichtung der Nut erstreckende Seitenwände der Teilnuten sein.

Die Nut der zweiten Scharnierhälfte kann an ihrer der durchgehenden Nutbegrenzungswand gegenüber liegenden Seite im Bereich zwischen den beiden Lagerteilen unterbrochen sein.

Weiterhin kann die zweite Scharnierhälfte zwei Lagerteile mit jeweils einer ersten Durchgangsbohrung zur Aufnahme des Verbindungsbolzens und eine sich zu den Durchgangsbohrungen parallel erstreckende Scharnierbolzenhülse zur Aufnahme der Drehachse aufweisen, wobei die beiden Lagerteile über einen Verbindungssteg unter einem Abstand zueinander mit fluchtenden ersten Durchgangsbohrungen und mit der Scharnierbolzenhülse verbunden sind, und wobei zwischen den Lagerteilen und dem Verbindungssteg die Nut ausgebildet ist.

Die Nut kann L-förmig ausgebildet sein, mit einem ersten Nutabschnitt zwischen dem Verbindungssteg und einer jeweiligen ersten Anlageseite der Lagerteile und mit einem zweiten Nutabschnitt zwischen der Scharnierbolzenhülse und einer jeweiligen zweiten Anlageseite der Lagerteile.

Je Lagerteil können die erste und die zweite Anlageseite senkrecht zueinander ausgerichtet sein und über einen ersten Rundabschnitt ineinander übergehen.

Der Verbindungssteg kann sich senkrecht zu einer weiteren Anlageseite der Scharnierbolzenhülse erstrecken, wobei die weitere Anlageseite parallel beabstandet zu den zweiten Anlageseiten angeordnet ist, sodass der zweite Nutabschnitt gebildet ist, wobei der Verbindungssteg über einen zweiten Rundabschnitt in die weitere Anlageseite übergeht, und wobei der Radius des ersten Rundabschnitts größer als der Radius des zweiten Rundabschnitts ist.

Die Scharnieranordnung kann insbesondere bei Großschränken, die ein Rahmengestell aufweisen, weiterhin ein Vertikalprofil des Rahmengestells eines Schaltschrankgehäuses aufweisen, wobei das Vertikalprofil im Querschnitt zwei senkrecht zueinander ausgerichtete Dichtstege aufweist, die über eine gegenüber Dichtkanten der beiden Dichtstege zurückversetzte Verbindungsprofilseite miteinander verbunden sind, wobei die erste Scharnierhälfte über die Verbindungsprofilseite an dem Vertikalprofil festgelegt ist.

Die erste Scharnierhälfte kann über einen Befestigungsflansch an der Verbindungsprofilseite festgelegt sein, an den ein L-förmiger Profilsabschnitt mit einem ersten Profilsteg unter einem 45°-Winkel angeformt ist, wobei der erste Profilsteg über einen 90°-Übergang in einen zweiten Profilsteg übergeht, an dessen freiem Ende ein Scharnierbolzensitz in der Drehachse angeordnet ist.

Gemäß einem anderen Aspekt der Erfindung wird ein Schaltschrankgehäuse beschrieben, das eine Seitenwand oder ein Vertikalprofil aufweist, an der oder an dem ein Türelement über mindestens eine Scharnieranordnung nach einem der vorangegangenen Ansprüche befestigt ist.

Weitere Einzelheiten der Erfindung werden anhand der nachstehenden Figuren erläutert. Dabei zeigt:
- Figur 1: eine perspektivische Ansicht eines beispielhaften Schaltschrankgehäuses, bei der sich das Türelement in einer um 180° geöffneten Stellposition befindet;
- Figur 2: eine Detailansicht auf die Scharnieranordnung des Schaltschrankgehäuses nach Figur 1;
- Figur 3: eine Draufsicht auf die Türseite des Schaltschrankgehäuses nach Figur 1 mit geöffneter Tür;
- Figur 4: eine Querschnittsansicht entlang des in Figur 3 eingezeichneten Schnittes B-B;
- Figur 5: eine Draufsicht auf die Türseite eines Schaltschrankgehäuses mit geschlossenem Türelement;
- Figur 6: eine Querschnittsansicht entlang des in Figur 5 eingezeichneten Schnittes A-A;
- Figur 7: eine perspektivische Ansicht eines Schaltschrankgehäuses mit geschlossenem Türelement;
- Figur 8: eine Detailansicht des Schaltschrankgehäuses gemäß Figur 7 im Bereich der Scharnieranordnung in perspektivischer Darstellung;
- Figur 9: eine bespielhafte Ausführungsform einer zweiten Scharnierhälfte;
- Figur 10: eine bespielhafte Ausführungsform einer ersten Scharnierhälfte;
- Figuren 11a-11d: verschiedene perspektivische Ansichten einer Scharnieranordnung, die aus den in den Figuren 9 und 10 gezeigten Scharnierhälften zusammengesetzt sind;
- Figur 12: eine weitere Ausführungsform einer Scharnieranordnung, die nicht zur Erfindung gehört, in der Offenstellung und in perspektivischer Darstellung;
- Figur 13: die Scharnieranordnung gemäß Figur 12 in der Draufsicht sowie mit entnommenem Türelement;
- Figur 14: die Scharnieranordnung gemäß Figur 12 in einer Explosionsdarstellung;
- Figur 15: eine weitere Ausführungsform einer Scharnieranordnung, die nicht zur Erfindung gehört, in der Schließstellung und im Horizontalquerschnitt; und
- Figur 16: die Scharnieranordnung gemäß Figur 15 in der Offenstellung und wiederum im Horizontalquerschnitt.

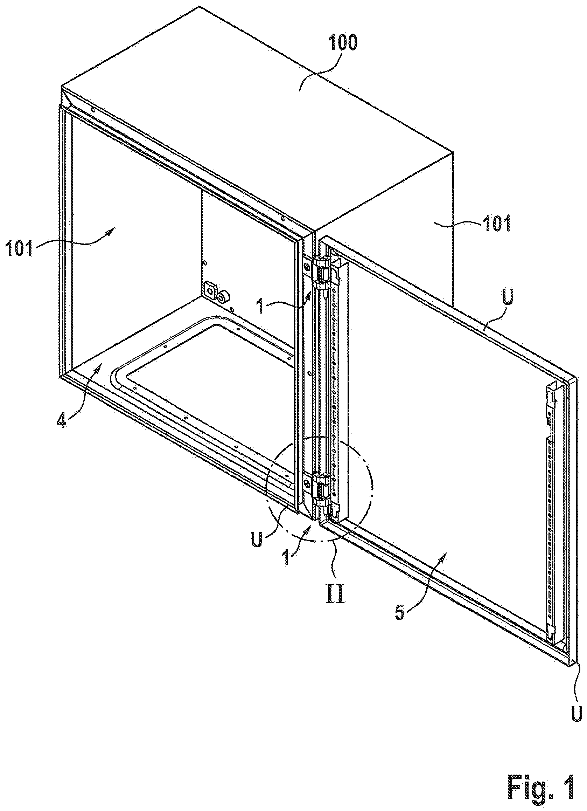

Figur 1 zeigt ein beispielhaftes Schaltschrankgehäuse 100, bei dem sich das Türelement 5 in einer um 180° gegenüber der Schließstellung verschwenkten Offenstellung befindet. Das Türelement 5 ist über zwei Scharnieranordnungen 1, die die Außenumfänge U von Türelement 5 und Schaltschrankgehäuse 100 miteinander verbinden, an dem Schaltschrankgehäuse 100 drehbar befestigt.

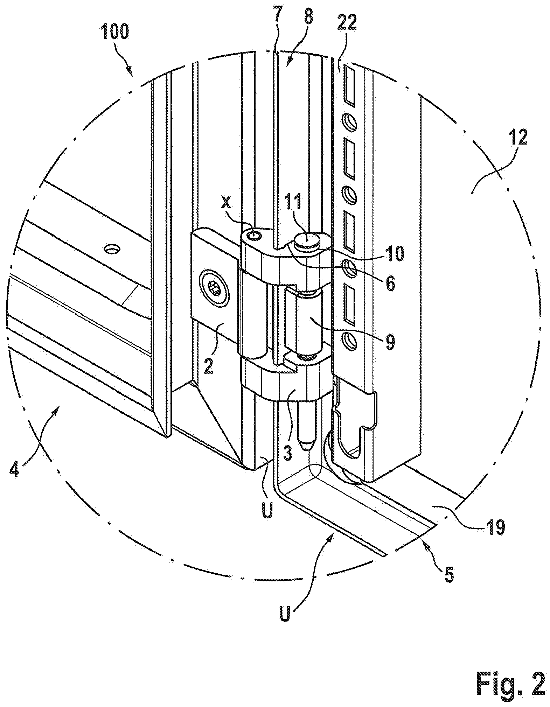

Die in der Darstellung gemäß Figur 1 untere Scharnieranordnung 1 ist in Figur 2 im Detail gezeigt. Demgemäß weist die Scharnieranordnung 1 eine erste Scharnierhälfte 2 auf, die am Außenumfang U des Schaltschrankgehäuses 100 über einen Bolzen festgelegt ist. Eine zweite Scharnierhälfte 3 ist über einen Vorsprung 7 am Außenumfang U des Türelements 5 aufgeclipst und über einen Verbindungsbolzen 11 an dem Türelement arretiert. Der Verbindungsbolzen 11 ist durch als Durchgangsbohrungen durch die zweite Scharnierhälfte 3 ausgebildete Befestigungsmittel 10 sowie ein türseitiges Befestigungsmittel 9, das eine am Außenumfang U des Türelements 5 aufgeschweißte Öse ist, hindurchgeführt.

An der Türinnenseite 12 des Türelements 5 ist ein Türrohrrahmen 22 angeordnet. Die Drehachse x ist von einem Dreh- oder Scharnierbolzen gebildet, welcher die beiden Scharnierhälften 2, 3 verschwenkbar zueinander miteinander verbindet.

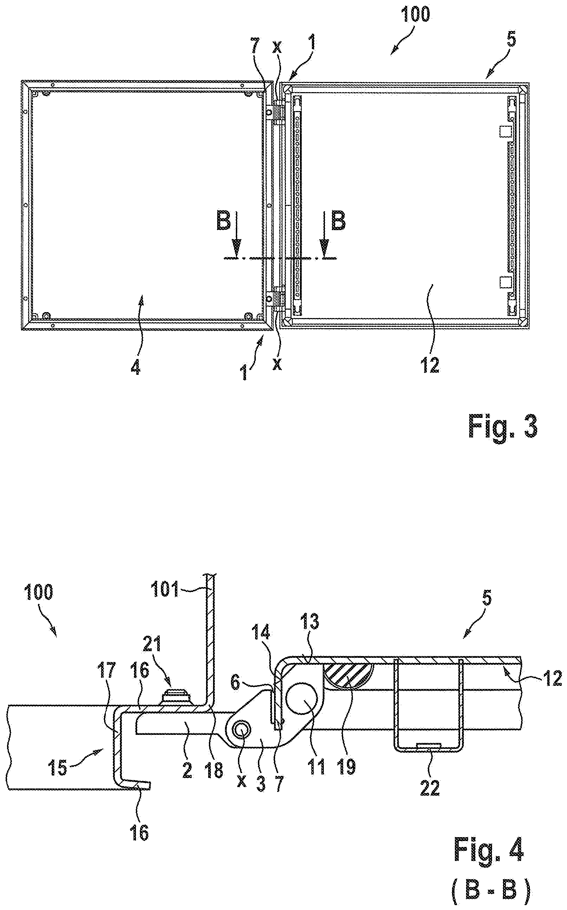

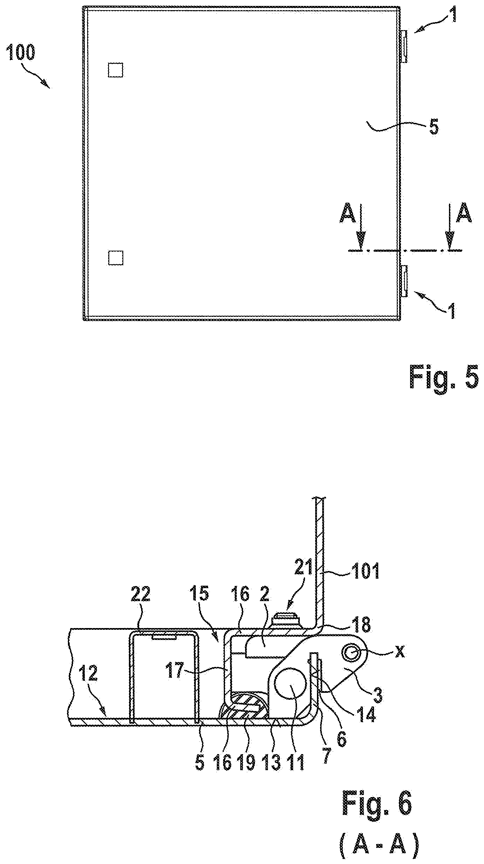

Der Aufbau der in den vorangegangenen Figuren gezeigten Scharnieranordnung 1 ist in den Figuren 3 und 4 weiter erläutert. In der in den Figuren 3 und 4 gezeigten Offenstellung des Türelements 5 ist zu erkennen, dass das Schaltschrankgehäuse 100 ein an seiner Seitenwand 101 anprofiliertes U-Profil 15 aufweist mit zwei im Wesentlichen parallelen Profilseiten 16, die unter einem Abstand zueinander über eine zu diesen senkrecht stehende weitere Profilseite 17 miteinander verbunden sind. In einen zwischen den im Wesentlichen parallelen Profilseiten 16 gebildeten Aufnahmeraum ragt die erste Scharnierhälfte 2 hinein und ist über eine Schraubverbindung mit der über eine 90°-Umkantung in die Seitenwand 101 übergehenden Profilseite 16 verschraubt. Die gegenüberliegende, freie Profilseite 16 bildet eine Dichtebene, die in der geschlossenen Stellung (vgl. Figur 6) an dem Dichtelement 19 zur Anlage kommt und somit in der Schließposition des Türelements 5 den Innenraum des Schaltschrankgehäuses 100 gegenüber der Umgebung abdichtet. Der Vorsprung 7 ist als eine umlaufend geschlossene 90°-Umkantung an dem Außenumfang U des Türelements 5 ausgebildet. Das Türelement 5 ist insbesondere ein gekantetes Flachteil, das eine Türseite aufweist, die sich in der Schließstellung (vgl. Figur 6) des Türelements 5 parallel zu der Türöffnung 4 erstreckt und diese bedeckt, und die die umlaufende 90°-Umkantung aufweist. Die zweite Scharnierhälfte 3 lagert mit einer ersten Stützfläche 13 an der Türseite 12 und mit einer zweiten Stützfläche 14 an der 90°-Umkantung.

In Figur 6 ist zu erkennen, wie in der Schließstellung die Dichtseite 16 in das Dichtelement eindringt, das heißt dieses komprimiert, um so eine dichtende Verbindung zwischen dem Schaltschrankgehäuse und dem Türelement herzustellen.

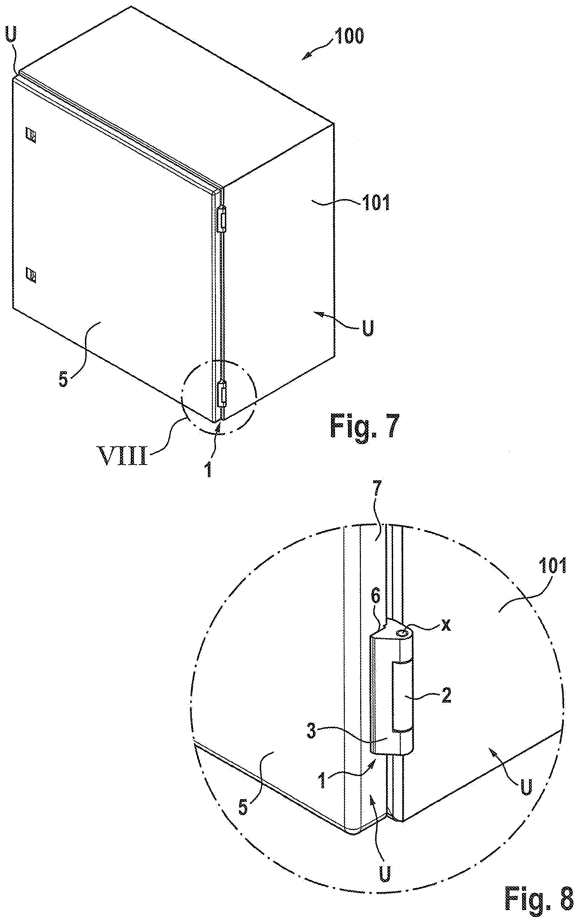

Die Figuren 7 und 8 veranschaulichen, dass die Drehachse x der Scharnieranordnungen 1 außerhalb sowohl des Außenumfangs U des Schaltschrankgehäuses 100 als auch des Türelements 5 angeordnet ist, wodurch die 180°-Verschwenkbarkeit des Türelements 5 gegenüber dem Gehäuse 100 ermöglicht wird.

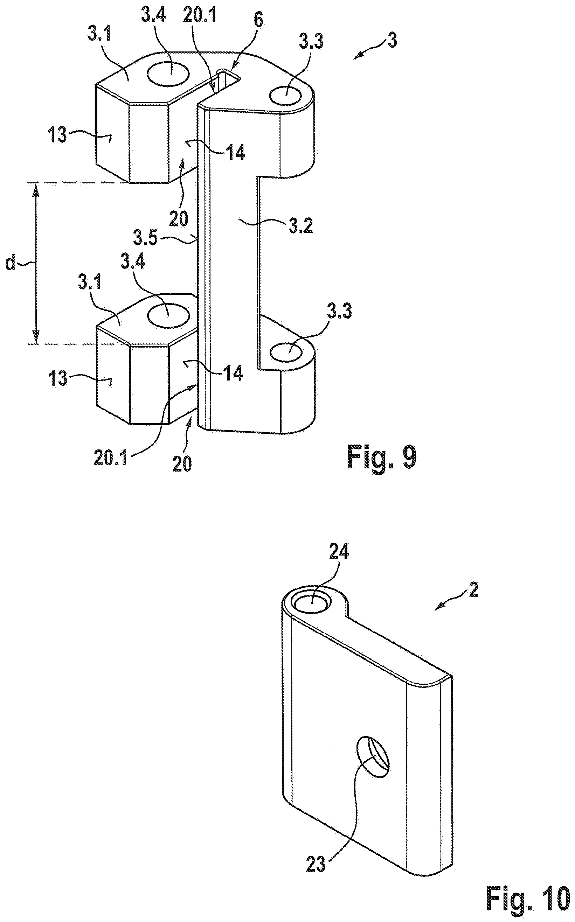

Eine beispielhafte Ausführungsform der ersten und der zweiten Scharnierhälfte ist in den Figuren 9 und 10 gezeigt. Die zweite Scharnierhälfte 3 gemäß Figur 9 weist zwei um einen Abstand d zueinander beabstandete Lagerteile 3.1 auf, mit jeweils einer ersten Durchgangsbohrung 3.3 zur Aufnahme der Drehachse x und einer sich dazu parallel erstreckenden zweiten Durchgangsbohrung 3.4 zur Aufnahme des Verbindungsbolzens 11. Die Lagerteile 3.1 weisen weiterhin sich ebenfalls parallel zu den ersten und zweiten Durchgangsbohrungen 3.3, 3.4 erstreckende Teilnuten 20 auf. Die beiden Lagerteile 3.1 sind über einen Verbindungssteg 3.2, um einen Abstand d zueinander und mit sowohl fluchtenden ersten und zweiten Durchgangsbohrungen 3.3 als auch fluchtenden Teilnuten 20 miteinander verbunden.

Es ist weiterhin zu erkennen, dass der Verbindungssteg 3.2 eine Anlageseite 3.5 aufweist, die mit jeweils einer Begrenzungsseite 20.1 der beiden Teilnuten 20 fluchtet, so dass die Anlageseite 3.5 des Verbindungssteges 3.2 mit den Begrenzungsseiten 20.1 der Teilnuten 20 eine in Drehachsenrichtung ebene und durchgehend einteilige Nutbegrenzungswand der Nut 6 der zweiten Scharnierhälfte 3 bildet. Weiterhin ist die Nut 6 der zweiten Scharnierhälfte 3 an ihrer der durchgehend einteiligen Nutbegrenzungswand gegenüberliegenden Seite im Bereich zwischen den beiden Lagerteilen 3.1 unterbrochen.

Die in Figur 10 gezeigte erste Scharnierhälfte 2 kann einen zu den Durchgangsbohrungen 3.3 korrespondierenden Drehachsendurchgang 24 aufweisen. Die erste Scharnierhälfte 2 ist somit im Wesentlichen formschlüssig zwischen den beiden Durchgangsbohrungen 3.3 der zweiten Scharnierhälfte 3 derart aufnehmbar, dass die Durchgangsbohrung 3.3 und der Drehachsendurchgang 24 fluchten, so dass eine Drehachse, beispielsweise in Form eines Metallstifts durch die fluchtenden Öffnungen 3.3, 24 hindurchgeführt werden kann und somit die Scharnierhälften 2, 3 zueinander verschwenkbar miteinander verbunden werden.

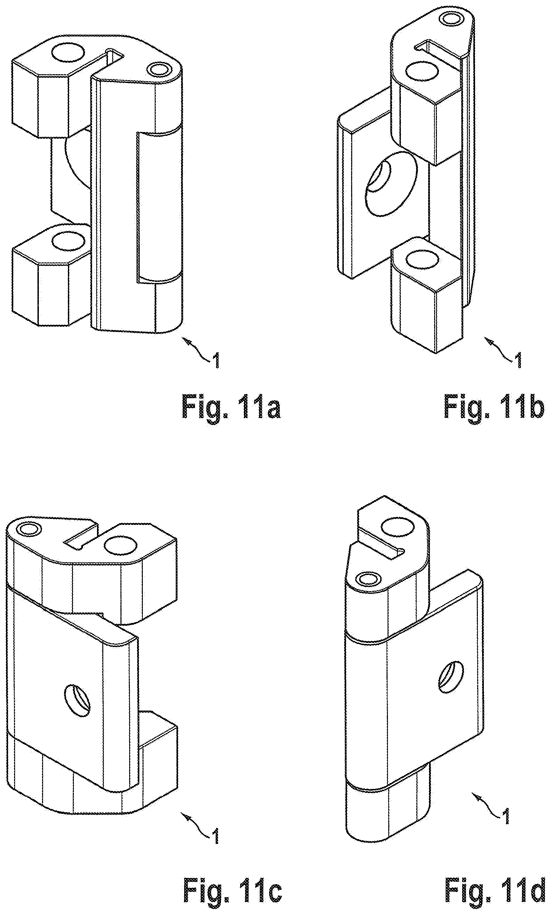

Die derart miteinander verbundenen Scharnierhälften 2, 3 bilden eine Scharnieranordnung 1, wie sie in verschiedenen perspektivischen Ansichten in den Figuren 11a-11d dargestellt sind.

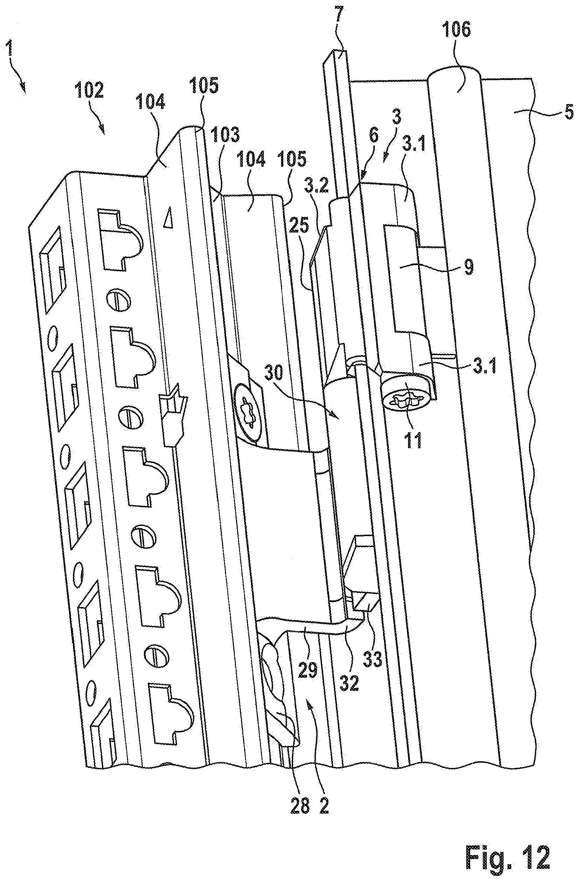

Die Figur 12 zeigt eine Scharnieranordnung 1, bei der ein Türelement 5 über ein aus einer ersten Scharnierhälfte 2 und einer zweiten Scharnierhälfte 3 gebildetes Scharnier verschwenkbar an einem Vertikalprofil 102 eines Schaltschrankgehäuses festgelegt ist. Das Vertikalprofil 102 kann Bestandteil eines Rahmengestells eines Schaltschrankgehäuses sein. Das Vertikalprofil 102 kann eine Querschnittsgeometrie aufweisen, wie sie aus der DE 10 2014 101 404 A1 bekannt ist.

Das Vertikalprofil 102 weist zwei im Wesentlichen senkrecht zueinander ausgerichtete Dichtstege 104 auf, die in zwei senkrecht zueinanderstehenden Ebenen Dichtebenen über ihre freien Dichtkanten 105 bilden, entlang welcher die Dichtstege 104 dichtend an einem Dichtelement 106 zur Anlage gebracht werden können. In der Darstellung gemäß Figur 8 weist das Türelement 5 an seiner Innenseite ein Dichtelement 106 auf, welches in der Schließstellung der Scharnieranordnung an der Dichtkante 105 des in der Darstellung vorderen Dichtstegs 104 zur Anlage kommt.

Zurückversetzt zu den freien Dichtkanten 105 sind die Dichtstege 104 über eine Verbindungsprofilseite 103 miteinander verbunden. Die Verbindungsprofilseite 103 erstreckt sich im Wesentlichen unter einem Winkel von 45° zu den beiden Dichtstegen 104. An der Verbindungsprofilseite 103 ist die erste Scharnierhälfte 2 über einen Befestigungsflansch 28 festgelegt. An den Befestigungsflansch 28 ist ein L-förmiger Ansatz angeformt, bestehend aus einem ersten Profilsteg 29, der sich unter einem Winkel von 45° zu dem Befestigungsflansch 28 erstreckt, und einem sich dazu unter einem 90°-Winkel erstreckenden zweiten Profilsteg 33. Der erste Profilsteg 29 und der zweite Profilsteg 33 sind über einen 90°-Übergang miteinander verbunden. An dem von dem Befestigungsflansch 28 abgewandten Ende des zweiten Profilstegs 33 ist an diesen ein Scharnierbolzensitz 30 angeformt, in welchem ein Scharnierbolzen beispielsweise im Presssitz aufgenommen sein kann, wobei der Scharnierbolzen mit einem freien Ende aus dem in der Darstellung gemäß Figur 12 oberen Ende des Scharnierbolzensitzes 30 herausragt und sich in eine Scharnierbolzenhülse 25 der zweiten Scharnierhälfte 3 hineinerstreckt, so dass die beiden Scharnierhälften 2, 3 zueinander verschwenkbar aneinander festgelegt sind.

Das Türelement 5 weist an seiner Innenseite ein Befestigungsmittel 9 auf, das in Form einer aufgeschweißten Blechlasche ausgebildet sei kann und über welche mit Hilfe eines Verbindungsbolzens 11 die zweite Scharnierhälfte 3 über ihre beiden Lagerteile 3.1. festgelegt ist. Die zweite Scharnierhälfte 3 weist wiederum eine Nut 6 auf, über welche sie auf einen Vorsprung 7 am Außenumfang des Türelementes 5 aufgesteckt ist. Der Vorsprung 7 ist dabei als eine äußere 90°-Umkantung des Türelements 5 ausgebildet, wobei der Vorsprung 7 an der Innenseite des Türelements 5 vorspringt.

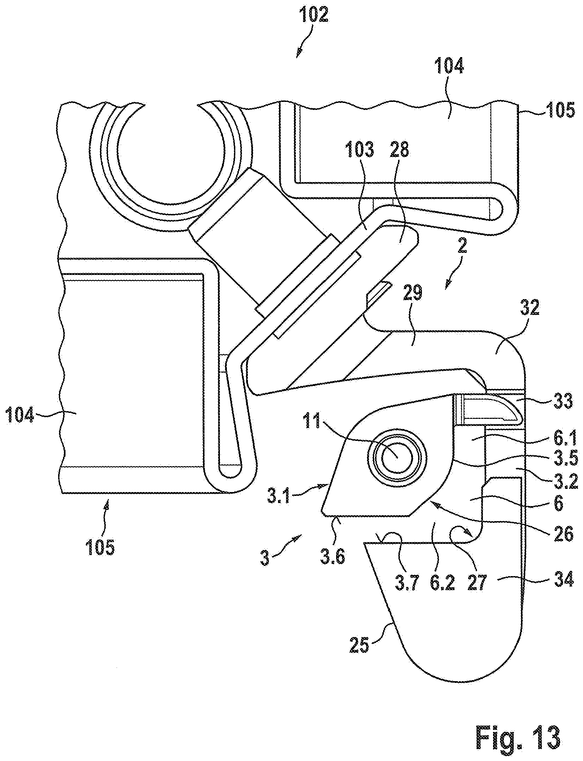

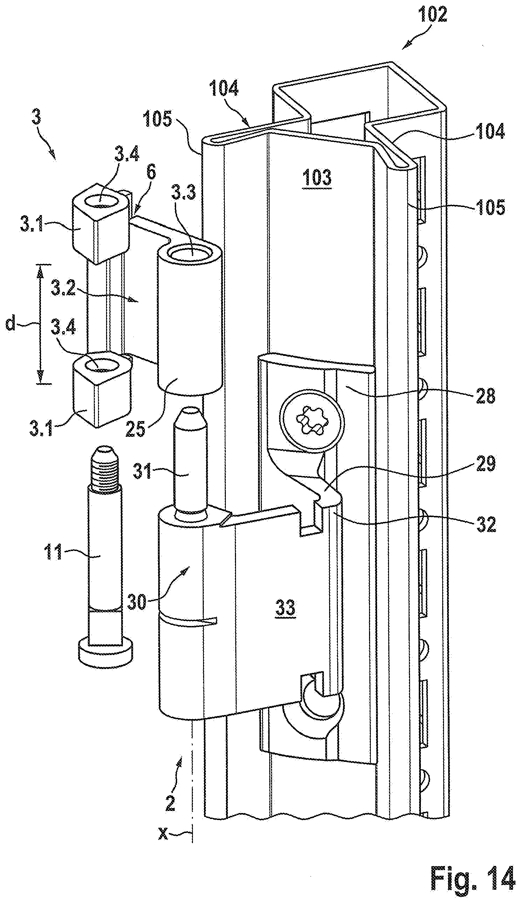

In der Zusammenschau der Figuren 13 und 14 sind weitere Einzelheiten der in Figur 12 gezeigten Ausführungsform einer Scharnieranordnung dargestellt, wobei zur besseren Veranschaulichung das Türelement 5 entfernt wurde. Demgemäß weist die zweite Scharnierhälfte 3 zwei Lagerteile 3.1 mit jeweils einer ersten Durchgangsbohrung 3.3 zur Aufnahme eines Verbindungsbolzens 11 auf. Mindestens eine der Durchgangsbohrungen 3.3 kann als Gewindebohrung ausgebildet sein, wenn, wie in Figur 10 dargestellt ist, beispielsweise das Einsteckende des Verbindungsbolzens 11 ein Außengewinde aufweist. Die zweite Scharnierhälfte 3 weist weiterhin eine sich zu den Durchgangsbohrungen 3.3 parallel erstreckende Scharnierbolzenhülse 25 zur Aufnahme der Drehachse x auf. Die Drehachse x ist von einem Scharnierbolzen 31 gebildet, der in einem Scharnierbolzensitz 30 der ersten Scharnierhälfte 2 im Presssitz aufgenommen ist.

Die beiden Lagerteile 3.1 sind über einen Verbindungssteg 3.2 unter einem Abstand d zueinander mit fluchtenden ersten Durchgangsbohrungen 3.3 und mit der Scharnierbolzenhülse 25 verbunden. Zwischen den Lagerteilen 3.1 und dem Verbindungssteg 3.2 ist die Nut 6 ausgebildet.

Die Nut 6 ist im Wesentlichen L-förmig ausgebildet und weist einen Nutabschnitt 6.1 zwischen dem Verbindungssteg 3.2 und einer jeweiligen ersten Anlageseite 3.5 der Lagerteile 3.1 auf, sowie einen zweiten Nutabschnitt 6.2, der zwischen der Scharnierbolzenhülse 25 und einer jeweiligen zweiten Anlageseite 3.6 der Lagerteile 3.1 gebildet ist. Je Lagerteil 3.1 sind die erste und die zweite Anlageseite 3.5, 3.6 senkrecht zueinander ausgerichtet und gehen über einen ersten Rundabschnitt 26 ineinander über.

Der Verbindungssteg 3.2 erstreckt sich senkrecht zu einer weiteren Anlageseite 3.7 der Scharnierbolzenhülse 25, wobei die weitere Anlageseite 3.7 parallel beabstandet zu den zweiten Anlageseiten 3.6 angeordnet ist, so dass der zweite Nutabschnitt 6.2 gebildet ist. Der Verbindungssteg 3.2 geht über einen zweiten Rundabschnitt 27 in die weitere Anlageseite 3.7 über. Der Radius des ersten Rundabschnitts 26 ist größer als der Radius des zweiten Rundabschnitts 27 ausgebildet.

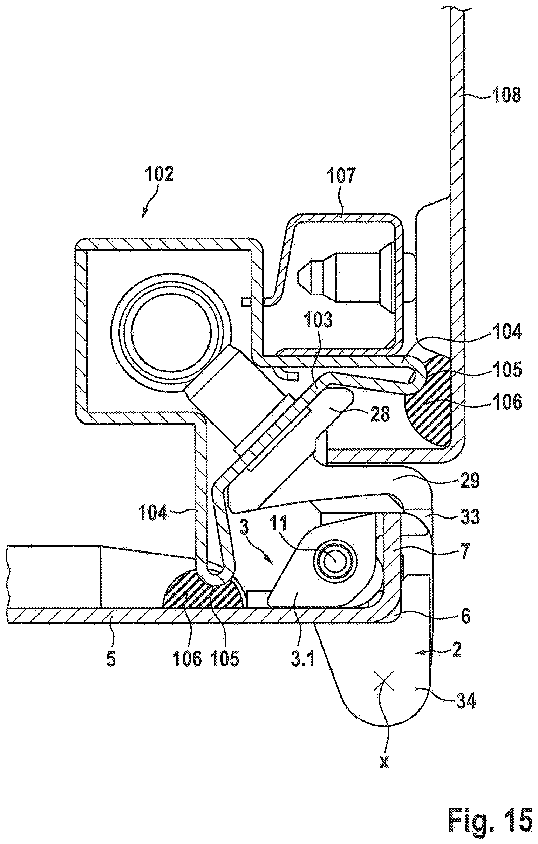

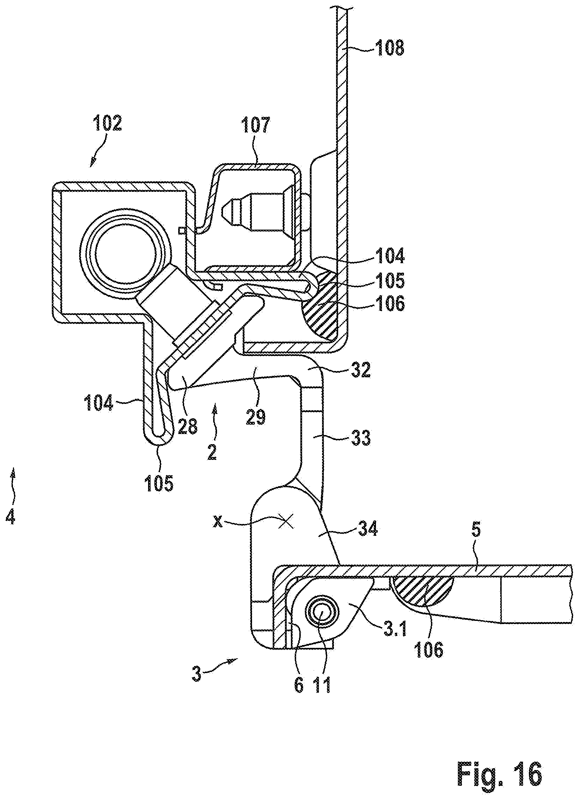

Die Figuren 15 und 16 zeigen eine Ausführungsform der erfindungsgemäßen Scharnieranordnung einmal in der Schließstellung (Figur 15) und einmal in der Offenstellung (Figur 16), wobei das Türelement 5 zwischen der Offenstellung und der Schließstellung um 180° um die Drehachse x verschwenkbar ist.

Die Anordnung gemäß den Figuren 15 und 16 weist neben dem aus den Scharnierhälften 2, 3 gebildeten Scharnier, welches an einem Vertikalprofil 102 eines Rahmengestells eines Schaltschranks festgelegt ist, weiterhin ein Flachteil 108 auf, welches über einen Flachteilhalter 107 an demselben Vertikalprofil 102 festgelegt ist. In der Schließstellung des Türelements 5 ist das Flachteil 108 in einer zur Türebene um 90° versetzten Ebene festgelegt. In der Schließstellung sind durch die als Dichtkanten 105 ausgebildeten freien Enden der Dichtstege 104, die sich entsprechend im Wesentlichen senkrecht zueinander erstrecken, Dichtebenen gebildet, über welche zum einen das Flachteil 108 und zum anderen das Türelement 5 gegenüber dem Vertikalprofil 102 abgedichtet ist.

Die Figur 12 lässt weiterhin erkennen, dass in der dargestellten Offenposition das Türelement 5 vollständig aus dem lichten Maß der Türöffnung 4 herausgeschwenkt ist. Die erste Scharnierhälfte 2 erstreckt sich in der Schließstellung des Türelements 5 zwischen einer Außenkante des Vorsprungs 7 und einer Umkantung des Flachteils 108, wobei die zweite Scharnierhälfte in der Schließstellung vollständig in einer zwischen dem türseitigen Dichtsteg 104, dem ersten Profilsteg 29, dem sich zu dem ersten Profilsteg 29 senkrecht erstreckenden zweiten Profilsteg 33 und dem Türelement 5 gebildeten Aufnahme aufgenommen ist, so dass in der Schließstellung die zweite Scharnierhälfte 3 vollständig bedeckt und damit von außen nicht sichtbar beziehungsweise vor jeglicher mechanischer Beanspruchung gesichert ist.

### Bezugszeichenliste

- 1: Scharnieranordnung
- 2.: erste Scharnierhälfte
- 3: zweite Scharnierhälfte
- 3.1: Lagerteil
- 3.2: Verbindungssteg
- 3.3: erste Durchgangsbohrung (Gewindebohrung)
- 3.4: zweite Durchgangsbohrung
- 3.5: erste Anlageseite
- 3.6: zweite Anlageseite
- 3.7: weitere Anlageseite
- 4: Türöffnung
- 5: Türelement
- 6: Nut
- 6.1: Nutabschnitt
- 6.2: zweiter Nutabschnitt
- 7: Vorsprung
- 8: Innenseite
- 9: Befestigungsmittel
- 10: weiteres Befestigungsmittel
- 11: Verbindungsbolzen
- 12: Türseite
- 13: erste Stützfläche
- 14: zweite Stützfläche
- 15: U-Profil
- 16: parallele Profilseite
- 17: weitere Profilseite
- 18: 90°-Umkantung
- 19: Dichtelement
- 20: Teilnut
- 20.1: Begrenzungsseite
- 21: Schrankverbindung
- 22: Türrohrrahmen
- 23: Befestigungsdurchlass
- 24: Drehachsendurchgang
- 25: Scharnierbolzenhülse
- 26: erster Randabschnitt
- 27: zweiter Randabschnitt
- 28: Befestigungsflansch
- 29: erster Profilsteg
- 30: Scharnierbolzensitz
- 31: Scharnierbolzen
- 32: 90°-Übergang
- 33: zweiter Profilsteg
- 34: Abdeckung
- 100: Schaltschrankgehäuse
- 101: Seitenwand
- 102: Vertikalprofil
- 103: Verbindungsprofilseite
- 104: Dichtsteg
- 105: Dichtkante
- 106: Dichtelement
- 107: Flachteilhalter
- 108: Flachteil
- d: Abstand
- U: Außenumfang
- x: Drehachse

## Patentansprüche

1. Schaltschrankgehäuse (100) mit einem Türelement (5) und mit mindestens einer Scharnieranordnung (1) mit
einer ersten Scharnierhälfte (2), die an einer eine Türöffnung (4) begrenzenden vertikalen Seitenwand (101) oder einem Vertikalprofil (102) eines Schaltschrankgehäuses (100) befestigt ist, und mit einer zweiten Scharnierhälfte (3), die an dem Türelement (5) befestigt ist, wobei die Scharnierhälften (2, 3) über eine Drehachse (x) zueinander verschwenkbar miteinander verbunden sind, so dass in einer Schließstellung das Türelement (5) die Türöffnung (4) verschließt und in einer Offenstellung vorzugsweise vollständig freigibt, wobei die Drehachse (x) außerhalb eines Außenumfangs (U) sowohl der Türöffnung (4) als auch des Türelements (5) angeordnet ist, wobei eine der Scharnierhälften (2, 3) eine Nut (6) aufweist, über die die Scharnierhälfte (2, 3) auf einen Vorsprung (7) an dem Außenumfang (U) des der Scharnierhälfte (2, 3) zugeordneten Teils von Schaltschrankgehäuse (100) und Türelement (5) aufgesteckt ist, wobei der Vorsprung (7) an seiner von dem Außenumfang (U) abgewandten Innenseite (8) ein Befestigungsmittel (9) und die auf den Vorsprung (7) über ihre Nut (6) vollständig aufgesteckte Scharnierhälfte (2, 3) ein mit dem Befestigungsmittel (9) wirkgekoppeltes weiteres Befestigungsmittel (10) aufweist, über die die zweite Scharnierhälfte (3) in ihrer vollständig auf den Vorsprung (7) aufgesteckten Position festgelegt ist, wobei das Türelement (5) ein gekantetes Flachteil ist, das eine Türseite (12) aufweist, die sich in der Schließstellung des Türelementes (5) parallel zu der Türöffnung (4) erstreckt und diese bedeckt, und die die umlaufende 90°-Umkantung aufweist, und wobei die zweite Scharnierhälfte (3) mit einer zweiten Stützfläche (14) an der 90°-Umkantung lagert, **dadurch gekennzeichnet, dass** die zweite Scharnierhälfte (3) mit einer ersten Stützfläche (13) an der Türseite (12) lagert.

2. Schaltschrankgehäuse (100) nach Anspruch 1, bei der sich der Vorsprung (7) parallel zu der Drehachse (x) und, zumindest dann, wenn das Türelement (5) die Türöffnung (4) verschließt, senkrecht zu der Türöffnung (4) erstreckt.

3. Schaltschrankgehäuse (100) nach Anspruch 1 oder 2, bei der der Vorsprung (7) eine, gegebenenfalls umlaufend geschlossene, 90°-Umkantung an dem Außenumfang (U) des Türelements (5) ist.

4. Schaltschrankgehäuse (100) nach Anspruch 1, bei der das Befestigungsmittel (9) eine Bolzendurchlassöffnung, insbesondere eine aufgeschweißte Öse und das weitere Befestigungsmittel (10) eine mit der Bolzendurchlassöffnung fluchtende weitere Bolzendurchlassöffnung durch die zweite Scharnierhälfte (3) ist, wobei die fluchtenden Bolzendurchlassöffnungen über einen durch sie hindurchgeführten Verbindungsbolzen (11) miteinander verbunden sind.

5. Schaltschrankgehäuse (100) nach einem der vorangegangenen Ansprüche, bei der das Schaltschrankgehäuse (100) an der Türöffnung (4) ein U-Profil (15) mit zwei parallelen oder im wesentlichen parallelen Profilseiten (16) aufweist, die über eine sich senkrecht zu diesen erstreckende weitere Profilseite (17) miteinander verbunden sind, wobei das U-Profil (15) über eine erste der parallelen Profilseiten (16) und eine weitere 90°-Umkantung (18) an die vertikale Seitenwand (101) anprofiliert ist, und wobei die zweite der parallelen Profilseiten (16) eine Dichtseite ist, die an einem türelementinnenseitig angeordneten Dichtelement (19) anliegt, wenn sich das Türelement (5) in seiner Schließstellung befindet.

6. Schaltschrankgehäuse (100) nach Anspruch 5, bei der sich das erste Scharnierelement (2) zwischen den beiden parallele Profilseiten (16) erstreckt und an der an die Seitenwand (101) anprofilierten Profilseite (16) befestigt ist.

7. Schaltschrankgehäuse (100) nach einem der Ansprüche 1 bis 4 , bei der die zweite Scharnierhälfte (3) zwei Lagerteile (3.1) mit jeweils einer ersten Durchgangsbohrung (3.3) zur Aufnahme der Drehachse (x), eine sich dazu parallel erstreckende zweite Durchgangsbohrung (3.4) zur Aufnahme des Verbindungsbolzens (11) und eine sich ebenfalls parallel dazu erstreckende in Drehachsenrichtung durchgehende Teilnut (20) aufweist, wobei die beiden Lagerteile (3.1) über einen Verbindungssteg (3.2) unter einem Abstand (d) zueinander und mit sowohl fluchtenden ersten und zweiten Durchgangsbohrungen (3.3) als auch fluchtenden Teilnuten (20) miteinander verbunden sind.

8. Schaltschrankgehäuse (100) nach Anspruch 1, bei der der Verbindungssteg (3.2) eine Anlageseite (3.5) aufweist, die mit jeweils einer Begrenzungsseite (20.1) der beiden Teilnuten (20) fluchtet, so dass die Anlageseite (3.5) des Verbindungssteges (3.2) mit den Begrenzungsseiten (20.1) der Teilnuten (20) eine in Drehachsenrichtung durchgehende Nutbegrenzungswand der Nut (6) der zweiten Scharnierhälfte (3) bilden.

9. Schaltschrankgehäuse (100) nach Anspruch 8, bei der die Nut (6) der zweiten Scharnierhälfte (3) an ihrer der durchgehenden Nutbegrenzungswand gegenüber liegenden Seite im Bereich zwischen den beiden Lagerteilen (3.1) unterbrochen ist.

## Claims

1. A switch cabinet housing (100) with a door element (5) and with at least one hinge arrangement (1) with a first hinge half (2), which is fastened to a vertical side wall (101) delimiting a door opening (4) or to a vertical profile (102) of a switch cabinet housing (100), and with a second hinge half (3), which is fastened to the door element (5), wherein the hinge halves (2, 3) are connected to one another so as to be pivotable with respect to one another via an axis of rotation (x), so that, in a closed position, the door element (5) closes the door opening (4) and, in an open position, preferably completely releases it, wherein the axis of rotation (x) is arranged outside at outer circumference (U) both of the door opening (4) and of the door element (5), wherein one of the hinge halves (2, 3) has a groove (6), via which the hinge half (2, 3) is plugged onto a projection (7) on the outer circumference (U) of that part of the switch cabinet housing (100) and door element (5) which is assigned to the hinge half (2, 3), wherein the projection (7) has, on its inner side (8) facing away from the outer circumference (U), a fastening means (9) and the hinge half (2, 3), which is completely plugged onto the projection (7) via its groove (6), has a further fastening means (10), which is operatively coupled to the fastening means (9) and via which the second hinge half (3) is fixed in its position in which it is completely plugged onto the projection (7), wherein the door element (5) is an angled flat part, which has a door side (12), which, in the closed position of the door element (5), extends parallel to the door opening (4) and covers the latter, and which has the circumferential 90° angled portion, and wherein the second hinge half (3) is mounted with a second support surface (14) on the 90° angled portion, **characterized in that** the second hinge half (3) is mounted with a first support surface (13) on the door side (12).

2. The switch cabinet housing (100) according to claim 1, in which the projection (7) extends parallel to the axis of rotation (x) and, at least when the door element (5) closes the door opening (4), perpendicularly to the door opening (4).

3. The switch cabinet housing (100) according to claim 1 or 2, in which the projection (7) is an optionally circumferentially closed 90° edge on the outer circumference (U) of the door element (5).

4. The switch cabinet housing (100) according to claim 1, in which the fastening means (9) is a bolt passage opening, in particular a welded-on eyelet, and the further fastening means (10) is a further bolt passage opening through the second hinge half (3) aligned with the bolt passage opening, wherein the aligned bolt passage openings are connected to one another via a connecting bolt (11) guided through them.

5. The switch cabinet housing (100) according to one of the preceding claims, in which the switch cabinet housing (100) has a U-profile (15) on the door opening (4) with two parallel or substantially parallel profile sides (16), which are connected to one another via a further profile side (17) extending perpendicularly thereto, wherein the U-profile (15) is profiled on the vertical side wall (101) via a first of the parallel profile sides (16) and a further 90° edge (18), and wherein the second of the parallel profile sides (16) is a sealing side, which bears against a sealing element (19) arranged on the inside of the door element when the door element (5) is in its closed position.

6. The switch cabinet housing (100) according to claim 5, in which the first hinge element (2) extends between the two parallel profile sides (16) and is fastened to the profile side (16) profiled on the side wall (101).

7. The switch cabinet housing (100) according to one of claims 1 to 4, in which the second hinge half (3) has two bearing parts (3.1) each with a first through-hole (3.3) for receiving the axis of rotation (x), a second through-hole (3.4) extending parallel thereto for receiving the connecting bolt (11), and a partial groove (20) extending likewise parallel thereto and continuous in the direction of the axis of rotation, wherein the two bearing parts (3.1) are connected to one another via a connecting web (3.2) at a distance (d) from one another and with both aligned first and second through-holes (3.3) and also aligned partial grooves (20).

8. The switch cabinet housing (100) according to claim 1, in which the connecting web (3.2) has a contact side (3.5) which is aligned with a respective boundary side (20.1) of the two partial grooves (20), so that the contact side (3.5) of the connecting web (3.2) forms, with the boundary sides (20.1) of the partial grooves (20), a continuous groove boundary wall of the groove (6) of the second hinge half (3) in the direction of the axis of rotation.

9. The switch cabinet housing (100) according to claim 8, in which the groove (6) of the second hinge half (3) is interrupted on its side opposite the continuous groove boundary wall in the region between the two bearing parts (3.1).

## Revendications

1. Boîtier d'armoire de commande (100) avec un élément de porte (5) et avec au moins une disposition de charnière (1) avec
une première moitié de charnière (2), qui est fixée à une paroi latérale verticale (101) limitant l'ouverture du porte (4) ou à un profilé vertical (102) d'un boîtier d'armoire de commande (100), et avec une deuxième moitié de charnière (3), qui est fixée à l'élément de porte (5), dans lequel les moitiés de charnière (2, 3) sont reliées entre elles de manière pivotante l'une par rapport à l'autre par l'intermédiaire d'un axe de rotation (x), de sorte que, dans une position fermée, l'élément de porte (5) obture l'ouverture de porte (4) et, dans une position ouverte, il la libère, de préférence entièrement, dans lequel l'axe de rotation (x) est disposé hors d'une périphérie externe (U) aussi bien de l'ouverture de porte (4) que de l'élément de porte (5), dans lequel une des moitiés de charnière (2, 3) présente une rainure (6) par l'intermédiaire de laquelle la moitié de charnière (2, 3) est emboîtée sur une saillie (7) au niveau de la circonférence externe (U) de la partie, correspondant à la moitié de charnière (2, 3), du boîtier d'armoire de commande (100) et de l'élément de porte (5), dans lequel la saillie (7) présente, au niveau de sa face interne (8) opposée à la périphérie externe (U), un moyen de fixation (9) et la moitié de charnière (2, 3), entièrement emboîtée sur la saillie (7) par l'intermédiaire de sa rainure (6), présente un autre moyen de fixation (10) couplé de manière fonctionnelle avec le moyen de fixation (9), par l'intermédiaire duquel la deuxième moitié de charnière (3) est immobilisée dans sa position entièrement emboîtée sur la saillie (7), dans lequel l'élément de porte (5) est une pièce plate pliée qui présente un côté de porte (12), qui s'étend, dans la position fermée de l'élément de porte (5), parallèlement à l'ouverture de porte (4) et recouvre celle-ci, et qui présente un pliage à 90° sur sa périphérie et dans lequel la deuxième moitié de charnière (3) est logée, avec une deuxième surface d'appui (14), contre le pliage à 90°, **caractérisé en ce que** la deuxième moitié de charnière (3) est logée avec une première surface d'appui (13) contre le côté de porte (12).

2. Boîtier d'armoire de commande (100) selon la revendication 1, dans lequel la saillie (7) s'étend parallèlement à l'axe de rotation (x) et perpendiculairement à l'ouverture de porte (4), au moins lorsque l'élément de porte (5) obture l'ouverture de porte (4).

3. Boîtier d'armoire de commande (100) selon la revendication 1 ou 2, dans lequel la saillie (7) est un pliage à 90°, le cas échéant périphérique et fermé, sur la périphérie externe (U) de l'élément de porte (5).

4. Boîtier d'armoire de commande (100) selon la revendication 1, dans lequel le moyen de fixation (9) est une ouverture de passage de tige, plus particulièrement un oeillet soudé et l'autre moyen de fixation (10) est une autre ouverture de passage de tige alignée avec l'ouverture de passage de tige, à travers la deuxième moitié de charnière (3), dans lequel les ouvertures de passage de tige alignées sont reliées entre elles par l'intermédiaire de tiges de liaison (11) qui les traversent.

5. Boîtier d'armoire de commande (100) selon l'une des revendications précédentes, dans lequel le boîtier d'armoire de commande (100) comprend, au niveau de l'ouverture de porte (4), un profilé en U (15) avec deux côtés de profilé (16) parallèles ou globalement parallèles, qui sont reliés entre eux par l'intermédiaire d'un autre côté de profilé (17) s'étendant perpendiculairement à ceux-ci, dans lequel le profilé en U (15) est profilé par l'intermédiaire d'un premier des côtés de profilé (16) parallèles et d'un autre pliage à 90° (18) au niveau de la paroi latérale verticale (101) et dans lequel le deuxième des côtés du profilé (16) parallèles est un côté d'étanchéité qui s'appuie contre un élément d'étanchéité (19) disposé sur le côté interne de l'élément de porte, lorsque l'élément de porte (5) se trouve dans sa position fermée.

6. Boîtier d'armoire de commande (100) selon la revendication 5, dans lequel le premier élément de charnière (2) s'étend entre les deux côtés de profilé (16) parallèles et est fixé au côté de profilé (16) profilé au niveau de la paroi latérale (101).

7. Boîtier d'armoire de commande (100) selon l'une des revendications 1 à 4, dans lequel la deuxième moitié de charnière (3) comprend deux parties de palier (3.1) avec chacune un premier alésage de passage (3.3) pour le logement de l'axe de rotation (x), un deuxième alésage de passage (3.4) parallèle à celui-ci pour le logement de la tige de liaison (11) et une rainure partielle continue (20) s'étendant parallèlement à celle-ci dans la direction de l'axe de rotation, dans lequel les deux parties de palier (3.1) sont reliées entre elles par l'intermédiaire d'une nervure de liaison (3.2) avec une distance (d) entre elles, et les premier et deuxième alésages de passage (3.3) alignés ainsi que les rainures partielles (20) alignées sont reliées entre eux.

8. Boîtier d'armoire de commande (100) selon la revendication 1, dans lequel la nervure de liaison (3.2) comprend un côté d'appui (3.5) qui est aligné respectivement avec un côté de limitation (20.1) des deux rainures partielles (20), de sorte que le côté d'appui (3.5) de la nervure de liaison (3.2) forme, avec les côtés de limitation (20.1) des rainures partielles (20), une paroi de limitation de rainure, continue dans la direction de l'axe de rotation, de la rainure (6) de la deuxième moitié de charnière (3).

9. Boîtier d'armoire de commande (100) selon la revendication 8, dans lequel la rainure (6) de la deuxième moitié de charnière (3) est interrompue, au niveau de son côté se trouvant en face de la paroi de limitation de rainure continue, dans la zone entre les deux parties de palier (3.1).
